Europäisches Patentamt

European Patent Office

Office européen des brevets

(19)

(11) Veröffentlichungsnummer : **0 092 084**
**B1**

(12) **EUROPÄISCHE PATENTSCHRIFT**

(45) Veröffentlichungstag der Patentschrift :
04.03.87

(51) Int. Cl.⁴ : **H 04 M   1/15**

(21) Anmeldenummer : 83103211.5

(22) Anmeldetag : 31.03.83

(54) Fernsprecheinrichtung mit integriertem elektronischem Textgeber.

(30) Priorität : 17.04.82 DE 3214260

(43) Veröffentlichungstag der Anmeldung :
26.10.83 Patentblatt 83/43

(45) Bekanntmachung des Hinweises auf die Patenterteilung : 04.03.87 Patentblatt 87/10

(84) Benannte Vertragsstaaten :
AT CH DE GB IT LI LU NL SE

(56) Entgegenhaltungen :
DE-A- 2 147 814
DE-B- 2 854 516
FR-A- 2 027 456
THE POST OFFICE ELECTRICAL ENGINEERS' JOUR-
NAL, Band 74, Teil 2, Juli 1981, Seiten 70-80, Old
Woking,Surrey, GB; D.A. PRITCHARD u.a.: "The development of the ambassador range of telephones and
production of the basic instrument"
FUNKSCHAU, Nr. 2, Januar 1982, Seiten 56-57, München, DE; H.-J. PROBST u.a.: "Sprechendes Telefon"

(73) Patentinhaber : **Neumann Elektronik GmbH**
**Bülowstrasse 104 - 110**
**D-4330 Mülheim 1 (DE)**

(72) Erfinder : **Neumann, Dirk, Dipl.-Ing.**
**Schemelsbruch 11**
**D-4330 Mülheim 1 (DE)**

(74) Vertreter : **Feder, Heinz, Dr. et al**
**Dominikanerstrasse 37**
**D-4000 Düsseldorf 11 (DE)**

EP 0 092 084 B1

Jouve, 18, rue St-Denis, 75001 Paris, France

## Beschreibung

Die Erfindung betrifft eine Fernsprecheinrichtung mit integriertem elektronischem Textgeber zur Abgabe und/oder Aufnahme von Texten in Form von analogen elektrischen Signalen über die Fernsprechleitung, bei dem mindestens ein Teil der Texte in digitaler Form in einem aus Festwertspeichern aufgebauten Textdatenspeicher speicherbar ist, wobei das Ein/Aus-lesen der Textdaten durch eine, einen Mikroprozessor enthaltende Steuervorrichtung erfolgt und zwischen dem Ein/Ausgang für Textdaten und dem Textdatenspeicher ein Analog/Digital-Digital/Analog-Wandler angeordnet ist und bei der an der Außenseite des Gehäuses eine Hörerauflage und ein Tastwahlblock angeordnet sind, sowie an der Oberseite des Gehäuses eine Vertiefung, in die ein zusätzliche Speicher enthaltendes Bauteil einsetzbar ist.

Eine derartige Fernsprecheinrichtung ist beispielsweise in DE-B-2 854 516 beschrieben. Bei der bekannten Einrichtung ist als zusätzlicher Speicher ein Magnetbandspeicher vorgesehen, der als Magnetbandkassette ausgebildet sein kann, die in die Vertiefung des Gehäuses einlegbar ist, während das Laufwerk zum Transport des Magnetbandspeichers fest innerhalb des Fernsprechapparates angeordnet ist. Der Magnetbandspeicher ist lediglich zur Aufzeichnung eines über die Fernsprechleitung empfangenen Textes vorgesehen.

Es ist weiterhin aus der FR-A-2 207 456 bekannt, bei einer Fernsprecheinrichtung neben einem Grundgerät mehrere Funktionsmodule vorzusehen, die nebeneinander und aneinander anschließend aufgestellt, über Steckverbindungen elektrisch miteinander verbunden sind und an ihrer Unterseite miteinander verschraubt sind, so daß sie eine einheitliche Baueinheit bilden, deren Einzelelemente nicht ohne weiteres leicht voneinander trennbar sind.

Aus der DE-A-3 010 745 ist weiterhin ein Fernsprechapparat mit Mitteln zur selbsttätigen Abgabe einer Mitteilung an einen Anrufer bekannt, der Merkmale einer Einrichtung der eingangs erwähnten Art aufweist, der aber lediglich zur Abgabe von in Festwertspeichern fest eingespeicherten Texten geeignet ist. Diese Texte können aber nicht vom Benutzer selbst aufgesprochen werden.

Es ist schließlich aus der DE-A-3 024 688 bekannt, bei einem Telefonanrufbeantworter zur Speicherung der Texte in digitaler Form einen Textdatenspeicher zu verwenden, der aus elektrisch programmierbaren und löschbaren Festwertspeichern (EEPROM) aufgebaut ist. Bei Verwendung eines aus diesen Festwertspeichern aufgebauten Textdatenspeichers ist es grundsätzlich möglich, daß der Benutzer der Einrichtung die über die Fernsprechleitung abzugebenden Texte selbst aufspricht. Genaueres über den Aufbau eines Telefonanrufbeantworters mit derartigen Speichern ist der zitierten Druckschrift jedoch nicht zu entnehmen.

Die der Erfindung zugrunde liegende Aufgabe bestand darin, eine Fernsprecheinrichtung der eingangs erwähnten Art so auszubilden, daß in einfacher Weise eine große Variationsmöglichkeit im Aufbau möglich wird und die Einrichtung an die Bedürfnisse sehr verschiedener Benutzer leicht angepaßt werden kann und auch je nach Bedarf nachträglich erweiterungsfähig ist.

Die Lösung dieser Aufgabe erfolgt erfindungsgemäß mit den im kennzeichnenden Teil des Patentanspruchs 1 angegebenen Merkmalen.

Vorteilhafte Ausführungsformen der erfindungsgemäßen Fernsprecheinrichtung sind in den Unteransprüche beschrieben.

Die Aufteilung der Fernsprecheinrichtung in ein Grundgerät und ein oder mehrere Funktionsmodule eröffnet eine Fülle von Möglichkeiten, die Einrichtung an sehr verschiedene Bedürfnisse eines Benutzers anzupassen. Es brauchen lediglich eine Reihe von verschiedenen Funktionsmodulen bereitgestellt werden, die zusammen mit dem Grundgerät verwendet und beliebig ausgetauscht werden können.

Besonders vorteilhaft ist es, wenn der Textdatenspeicher des Grundgerätes aus elektronisch programmbierbaren und löschbaren Festwertspeichern aufgebaut ist. Eine derartige Einrichtung ist beispielsweise in einer parallellaufenden Patentanmeldung (EP-A-0 092 083) mit gleichem Anmeldedatum mit der Bezeichnung « Elektronischer Textgeber zur Abgabe und/oder Aufnahme von Texten über eine Fernsprechleitung » ausführlich erläutert.

Die das Grundgerät erweiternden Funktionsmodule können beispielsweise lediglich weitere elektronisch programmierbare und löschbare Festwertspeicher enthalten, wodurch die zur Verfügung stehende Aufsprechzeit vergrößert wird. Die Funktionsmodule können aber auch Festwertspeicher enthalten, in denen fest vorgegebene Texte oder Textteile eingespeichert sind, die mit aufsprechbaren Texten oder Textteilen kombiniert werden können. Auf diese Weise kann der Benutzer bestimmte Texte, beispielsweise die Anrede selbst aufsprechen, während andere Texte als Standardtexte, beispielsweise von einem geschulten Sprecher, aufgesprochen sein können. Weiterhin ist es möglich, daß in die Festwertspeicher eines Funktionsmoduls ein, eine Uhrzeitansage enthaltender Text eingegeben ist, durch den einem Anrufer mitgeteilt wird, wann der Angerufene wieder zu erreichen ist. In diesem Text können dann durch am Funktionsmodul angeordnete Vorwahlschalter verschiedene Uhrzeiten eingegeben werden.

Weiterhin ist es möglich, ein Funktionsmodul vorzusehen, in dem ein Magnetbandspeicher zur Aufnahme von Mitteilungen des Anrufers angeordnet ist. Auf diese Weise läßt sich die Fernsprecheinrichtung von einer reinen Einrichtung mit Hinweisansage zu einem echten üblichen Anrufbeantworter erweitern.

Ein weiterer Vorteil der erfindungsgemäßen Fernsprecheinrichtung besteht darin, daß die Gesamteinrichtung ohne Änderung des Grundgerätes an den technischen Fortschritt angepaßt werden, indem lediglich erweiterte oder geänderte Funktionsmodule zur Verfügung gestellt werden.

Im folgenden wird anhand der beigefügten Zeichnungen ein Ausführungsbeispiel für eine Fernsprecheinrichtung nach der Erfindung näher erläutert.

In den Zeichnungen zeigen :

Figur 1 den äußeren Aufbau einer Fernsprecheinrichtung mit einem Grundgerät sowie einem eingesetzten Funktionsmodul und drei weiteren in explodierter Darstellung darüber angeordneten Funktionsmodulen ;

Figur 2 ein Blockschaltbild einer Fernsprecheinrichtung mit drei zusätzlichen Funktionsmodulen nach der Erfindung.

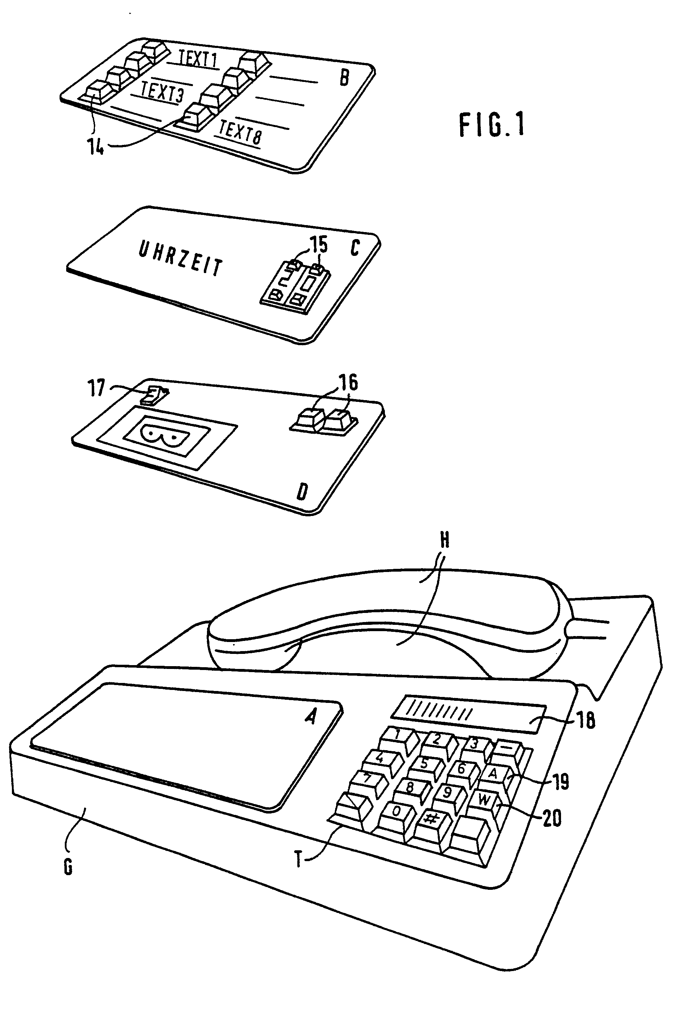

In Fig. 1 ist der äußere Aufbau einer Fernsprecheinrichtung dargestellt, mit einem Grundgerät G, an dessen Oberseite in üblicher Weise eine Hörerauflage H sowie ein Tastwahlblock T angeordnet ist. An der Oberseite des Gehäuses G ist neben dem Tastwahlblock T eine flache Aufnahmemulde angeordnet, in welche Funktionsmodule A, B, C, D einsetzbar sind. An den Funktionsmodulen A, B, C, D sowie innerhalb der Aufnahmemulde sind in nicht eigens dargestellter Weise Steckvorrichtungen zur Verbindung der Schaltkreise der Funktionsmodule mit den Schaltkreisen des Grundgerätes angeordnet.

Bei der dargestellten Einrichtung sind Funktionsmodule mit folgenden Eigenschaften vorgesehen :

Funktionsmodul A :

Dieses Funktionsmodul enthält lediglich zusätzliche Festwertspeicher, die als elektrisch programmierbare und löschbare Festwertspeicher (EEPROM) aufgebaut sind und die die Aufsprechzeit für den Benutzer vergrößern. Während die im Grundgerät angeordneten Festwertspeicher beispielsweise eine Aufsprechzeit von 4 bis 6 Sekunden ermöglichen, kann die Aufsprechzeit durch Einsetzen des Funktionsmoduls A beispielsweise bis auf 30 Sekunden erweitert werden.

Funktionsmodul B :

In diesem Funktionsmodul sind eine Reihe üblicher Festwertspeicher angeordnet, in die fest vorgegebene Texte oder Textteile eingespeichert sind, die mit den vom Benutzer aufgesprochenen Textteilen kombiniert werden können. Das Abrufen der in das Funktionsmodul B eingespeicherten Textteile erfolgt über an der Oberseite des Funktionsmoduls B angeordnete Schalter oder Druckknöpfe 14.

Funktionsmodul C :

Auch in diesem Funktionsmodul sind übliche Festwertspeicher mit fest eingespeicherten Texten enthalten, die eine Uhrzeitansage darstellen. Dabei kann die Uhrzeit durch an der Oberseite des Funktionsmoduls C angeordnete Tastschalter 15 als zweistellige Zahl frei vorgegeben werden. Der Textgeber kann dann beispielsweise folgenden Text in die Fernsprechleitung abgeben : « Bitte rufen Sie um 20.00 Uhr wieder an ».

Funktionsmodul D :

Dieses Funktionsmodul enthält einen üblichen Magnetbandspeicher wie er auch in bekannten Telefonanrufbeantwortern enthalten ist. In diesem Magnetbandspeicher können Mitteilungen eingespeichert werden, die der Anrufer über die Fernsprechleitung aufspricht. An der Oberseite dieses Funktionsmoduls D sind Schalter 16, 17 für Aufnahme, Wiedergabe und das Ein/Ausschalten vorgesehen.

An der Oberseite des Grundgerätes ist weiterhin eine Kontrollanzeige 18 vorgesehen, an der der Benutzer die schon verbrauchte oder die noch vorhandene Aufsprechzeit ablesen kann. Diese Kontrollanzeige kann in an sich bekannter Weise als Leuchtdiodenanzeige oder auch als LCD-Balkenanzeige oder LCD-Ziffernanzeige ausgebildet sein.

Zum Ein- und Ausschalten der Gesamteinrichtung können in vorteilhafter Weise Funktionstasten des an der Oberseite des Grundgerätes G angeordneten Tastwahlblocks T, der im gezeigten Ausführungsbeispiel 4 × 4 Tasten enthält, verwendet werden. Die Tasten 19 und 20 dieses Tastwahlblockes werden in vielen Fällen für den reinen Fernsprechapparat nicht benötigt und stehen daher als Tasten für « Aufnahme » und « Wiedergabe » zur Verfügung.

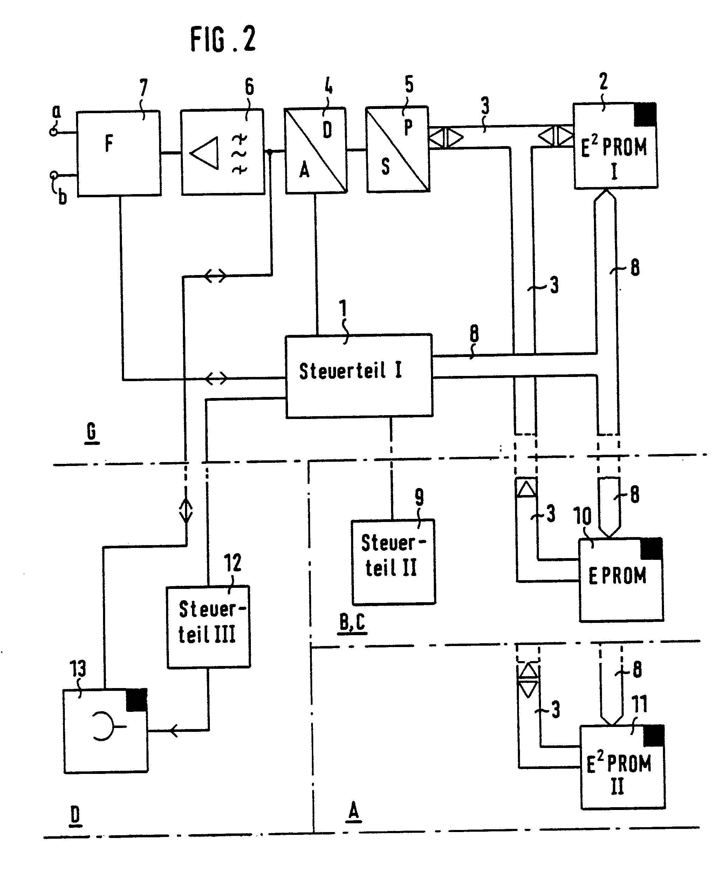

In Fig. 2 ist der innere Aufbau der Gesamteinrichtung in einem Blockschaltbild dargestellt.

Das Grundgerät G besitzt eine mit « Steuerteil I » bezeichnete Steuervorrichtung 1, die einen Mikroprozessor enthält. Von dieser Steuervorrichtung 1 aus werden alle Funktionsabläufe innerhalb der Gesamteinrichtung gesteuert. Weiterhin enthält das Grundgerät G einen mit « $E^2$ PROM I » bezeichneten Textdatenspeicher 2.

Vom Benutzer aufgesprochene oder über die Fernsprechleitung a/b zugeführte Texte in Form von analogen elektrischen Signalen gelangen von einem Fernsprechapparat 7 über einen Filterverstärker 6, einen Analog/Digital-Wandler 4, einen Seriell/Parallel-Wandler 5 und eine Datenbusleitung 3 zum Textdatenspeicher 2, wobei die Adressierung des Textdatenspeichers 2 von der Steuervorrichtung 1 aus über eine Adressenbusleitung 8 erfolgt. Ebenso erfolgt die Wiedergabe von im Textdatenspeicher 2 gespeicherten Texten in umgekehrter Richtung über die Datenbusleitung 3, einen Parallel-Seriell-Wandler 5, einen Digital/Analog-Wandler 4, den Filterverstärker 6 zum Fernsprechapparat 7.

Die Funktionsmodule B und C weisen eine ergänzende mit « Steuerteil II » bezeichnete Steuervorrichtung 9, die an die Steuervorrichtung 1 anschließbar ist, sowie einen ergänzenden aus üblichen Festwertspeichern aufgebauten Textdatensepeicher 10 auf, der an die Datenbusleitung 3 und die Adressenbusleitung 8 anschließbar ist.

Das Funktionsmodul A weist lediglich einen ergänzenden mit « E² PROM II » bezeichneten aus elektrisch programmierbaren und löschbaren Festwertspeichern aufgebauten Textdatenspeicher 11 auf, der an die Datenbusleitung 3 und die Adressenbusleitung 8 anschließbar ist.

Das Funktionsmodul D weist eine mit « Steuerteil III » bezeichnete zusätzliche Steuervorrichtung 12 auf, die an die Steuervorrichtung 1 anschließbar ist. Weiterhin besitzt es einen direkt an den Filterverstärker 6 des Grundgerätes G anschließbaren Magnetbandspeicher 13, in den vom Anrufer aufgesprochene Mitteilungen als analoge elektrische Signale eingespeichert werden.

Wie man Fig. 2 direkt entnehmen kann, ist das Grundgerät durch Hinzufügen der Funktionsmodule A, B, C und D in der bereits erläuterten Weise erweiterbar.

## Patentansprüche

1. Fernsprecheinrichtung mit integriertem elektronischem Textgeber zur Abgabe und/oder Aufnahme von Texten in Form von analogen elektrischen Signalen über die Fernsprechleitung, bei dem mindestens ein Teil der Texte in digitaler Form in einem aus Festwertspeichern aufgebauten Textdatenspeicher (2) speicherbar ist, wobei das Ein/Auslesen der Textdaten durch eine, einen Mikroprozessor enthaltende Steuervorrichtung (1) erfolgt und zwischen dem Ein/Ausgang (a, b) für Textdaten und dem Textdatenspeicher (2) ein Analog/Digital-Digital/Analog-Wandler (4) angeordnet ist und bei der an der Außenseite des Gehäuses (G) eine Hörerauflage (H) und ein Tastenwahlblock (T) angeordnet sind, sowie an der Oberseite des Gehäuses (G) eine Vertiefung, in die ein zusätzliche Speicher (10, 11, 13) enthaltendes Bauteil (A, B, C, D) einsetzbar ist, dadurch gekennzeichnet, daß die Gesamteinrichtung aus einem Grundgerät (G) und ein oder mehreren, in die mit elektrischen Steckvorrichtungen versehene Vertiefung einsetzbaren, als im wesentlichen rechteckige flache Platten ausgebildeten Funktionsmodulen (A, B, C, D) besteht, wobei im Grundgerät (G) die Schaltkreise eines Fernsprechapparates (7) und Vorrichtungen zur Ruferkennung und Auswertung sowie mindestens ein Teil der Steuervorrichtung (1) mit dem Mikroprozessor, ein Teil der den Textdatenspeicher aufbauenden Festwertspeicher (2) und der Analog/Digital-Digital/Analog-Wandler (4) des elektronischen Textgebers angeordnet sind und in den Funktionsmodulen (A, B, C, D) zusätzliche Speicher und/oder zusätzliche Steuervorrichtungen angeordnet sind, deren Schaltkreise mit den Schaltkreisen des Grundgerätes (G) über die elektrischen Steckvorrichtungen verbunden sind.

2. Fernsprecheinrichtung nach Anspruch 1, dadurch gekennzeichnet, daß die den Textdatenspeicher (2) des Grundgerätes (G) aufbauenden Festwertspeicher elektronisch programmierbare und löschbare Festwertspeicher (EEPROM) sind, in die frei vorgebbare Texte oder Textteile einspeicherbar sind.

3. Fernsprecheinrichtung nach Anspruch 1 oder 2, dadurch gekennzeichnet, daß mindestens eines der Funktionsmodule (B) Festwertspeicher (EPROM) enthält, in denen fest vorgegebene Texte oder Textteile eingespeichert sind.

4. Fernsprecheinrichtung nach Anspruch 3, dadurch gekennzeichnet, daß mindestens eines der Funktionsmodule (C) Festwertspeicher (10) sowie Steuerschaltungen (9) zur Abgabe einer Uhrzeitansage enthält, wobei an der Außenseite des Funktionsmoduls ein oder mehrere Vorwahlschalter (15) zur Vorgabe einer in einen Text einzufügenden Uhrzeit angeordnet sind.

5. Fernsprecheinrichtung nach Anspruch 1 oder 2, dadurch gekennzeichnet, daß mindestens eines der Funktionsmodule (A) elektrisch programmierbare und löschbare Festwertspeicher (EEPROM) enthält, in die frei vorgebbare Texte oder Textteile einspeicherbar sind.

6. Fernsprecheinrichtung nach Anspruch 1 oder 2, dadurch gekennzeichnet, daß mindestens eines der Funktionsmodule (D) einen Magnetbandspeicher (13) zur Aufnahme von durch die Fernsprechleitung vom Anrufer aufgesprochener Texte enthält.

7. Fernsprecheinrichtung nach einem der Ansprüche 1 bis 6, dadurch gekennzeichnet, daß am Grundgerät (G) eine Kontrollanzeige (18) für die Aufsprechzeit angeordnet ist.

8. Fernsprecheinrichtung nach einem der Ansprüche 1 bis 7, dadurch gekennzeichnet, daß zur Ein/Ausschaltung des Grundgerätes (G) und/oder der eingesteckten Funktionsmodule (A, B, C, D) Tasten (19, 20) des Tastwahlblocks (T) dienen.

## Claims

1. Telephone device with an integrated electronic message transmitter for delivering and/or receiving messages in the form of analogous electric signals through the telephone line, in which message transmitter at least part of the messages is adapted to be stored in digital form in a data storage assembly (2) composed of set-value memories, whereby the read-in/read-out of the message data is performed by a control unit (1) containing a microprocessor and, between the input/output (a, b) for message data and the data storage assembly (2), an analog/digital-digital/analog converter (4) is arranged, a receiver support (H) and a key-type dialling block (T) being provided on the outside of the casing (G) of the telephone device, and a depression into which a constructional component (A, B, C, D) containing additional storage assemblies (10, 11, 13) is adapted to be inserted, being provided on the upper side of said casing (G), characterized in that the entire device comprises a basic apparatus (G) and one or more functional modules (A, B, C, D) formed as substantially rectangular flat plates and adapted to be inserted in the depression which is provided with electrical plug-in connectors, whereby the circuits of a telephone set (7) and the assemblies for the call detection and evaluation as well as at least part of the control unit (1) with the microprocessor, part of the set-value memories forming the data storage assembly (2), and the analog/digital-digital/analog converter (4) of the electronic text transmitter, are arranged in the basic apparatus (G), and whereby additional storage assemblies and/or additional control units are arranged in the functional modules (A, B, C, D), the circuits of said additional assemblies and units being connected with the circuits of the basic apparatus (G) through said electrical plug-in connectors.

2. Telephone device as claimed in claim 1, characterized in that the set-value memories forming the data storage assembly (2) of the basic apparatus (G), are set-value memories (EEPROM) which are electronically programmable and resettable, in which set-value memories freely selectable messages or message portions are adapted to be stored.

3. Telephone device as claimed in claim 1 or 2, characterized in that at least one of the functional modules (B) comprises set-value memories (EPROM) in which given messages or message portions are stored.

4. Telephone device as claimed claim 3, characterized in that at least one of the functional modules (C) comprises set-value memories (10) as well as control circuits (9) for supplying a clock announcement, whereby one or more pre-selection switches (15) are attached to the outside of the functional module for selecting a clock time which is to be inserted in a message.

5. Telephone device as claimed in claim 1 or 2, characterized in that at least one of the functional modules (A) comprises electrically programmable and resettable set-value memories (EEPROM) in which freely selectable messages or message portions are adapted to be stored.

6. Telephone device as claimed in claim 1 or 2, characterized in that at least one of the functional modules (D) comprises a magnetic tape memory (13) for receiving messages from a calling party through the telephone line.

7. Telephone devices as claimed in one of claims 1 to 6, characterized in that an indicator (18) for the recording time is attached to the basic apparatus (G).

8. Telephone device as claimed in one of claims 1 to 7, characterized in that keys (19, 20) of the key-type dialling block (T) serve for switching on/off the basic apparatus (G) and/or the plugged-in functional modules (A, B, C, D).

**Revendications**

1. Installation téléphonique avec émetteur de texte électronique intégré pour émettre et/ou recevoir des textes sous forme de signaux électriques analogiques passant par la ligne téléphonique, dans laquelle au moins une partie des textes peut être mise en mémoire dans une mémoire de données de textes (2) constituée de mémoires fixes tandis que l'introduction/la lecture des données de textes s'effectue au moyen d'un dispositif de commande (1) comportant un microprocesseur, qu'un convertisseur analogique/numérique-numérique/analogique (4) est disposé entre l'entrée/sortie (a, b) pour les données de textes et la mémoire de données de textes (2) et qu'un support d'écouteur (H) et un sélecteur à touches (T) sont disposés sur le côté extérieur du boîtier (G), alors que sur le côté supérieur du boîtier (G) se trouve un renfoncement dans lequel peut être inséré un élément constructif (A, B, C, D) contenant des mémoires supplémentaires (10, 11, 13), caractérisée en ce que l'ensemble de l'installation est constitué d'un appareil de base (G) et d'un ou plusieurs modules fonctionnels (A, B, C, D) se présentant sous forme de plaques essentiellement plates et rectangulaires pouvant être insérées dans le renfoncement pourvu de dispositifs à fiches, l'appareil de base (G) contenant les circuits de commutation d'un appareil téléphonique (7) et des dispositifs pour reconnaître et évaluer les appels ainsi qu'au moins une partie du dispositif de commande (E) avec le microprocesseur, une partie des mémoires fixes (2) constituant la mémoire de données de textes et le convertisseur analogique/numérique-numérique/analogique (4) de l'émetteur de textes électronique, tandis que dans les modules fonctionnels (A, B, C, D) des mémoires supplémentaires et/ou des dispositifs de commande supplémentaires sont disposés avec leur circuit de commutation connecté aux circuits de commutation de l'appareil de base (G) par l'intermédiaire des dispositifs électriques à fiches.

2. Installation téléphonique selon la revendication 1, caractérisée en ce que les mémoires fixes constituant la mémoire de données de textes (2) de l'appareil de base (G) sont des mémoires fixes électroniquement programmables et effaçables (EPROM), dans lesquelles des textes ou des parties de textes pouvant être choisis librement peuvent être mis en mémoire.

3. Installation téléphonique selon la revendication 1 ou 2, caractérisée en ce qu'au moins l'un des modules fonctionnels (B) contient des mémoires fixes (EPROM), dans lesquelles des textes ou des parties de textes prédéterminés sont mis en mémoire.

4. Installation téléphonique selon la revendication 3, caractérisée en ce qu'au moins l'un des modules fonctionnels (C) contient une mémoire fixe (10) ainsi que des circuits de commande (9) pour émettre une indication de temps horaire tandis que, sur le côté extérieur du module fonctionnel, sont disposés un ou plusieurs commutateurs de présélection (15) pour introduire un temps horaire devant figurer dans un texte.

5. Installation téléphonique selon la revendication 1 ou 2, caractérisée en ce qu'au moins l'un des modules fonctionnels (A) contient des mémoires fixes électriquement programmables et effaçables (EPROM), dans lesquelles peuvent être mis en mémoire des textes ou des parties de textes pouvant être choisis librement.

6. Installation téléphonique selon la revendication 1 ou 2, caractérisée en ce qu'au moins l'un des modules fonctionnels (D) contient une mémoire à bande magnétique (13) pour enregistrer les textes transmis par le poste d'appel par l'intermédiaire de la ligne téléphonique.

7. Installation téléphonique selon l'une des revendications 1 à 6, caractérisée en ce qu'un affichage de contrôle (18) est disposé sur l'appareil de base (G), en vue d'indiquer le temps de conversation.

8. Installation téléphonique selon l'une des revendications 1 à 7, caractérisée en ce que les touches (19, 20) du sélecteur à touches (T) servent pour l'enclenchement/le déclenchement de l'appareil de base (G) et/ou des modules fonctionnels insérés (A, B, C, D).

FIG.1

# FIG.2